# EUROPEAN PATENT APPLICATION

(11) **EP 4 480 968 A1**
(43) Date of publication of application: **25.12.2024**
(21) Application number: 23756426.5
(22) Date of filing: 16.02.2023
(51) Int. Cl.: C08F 2/00, C08F 212/14, C08F 220/10

(54) **COPOLYMER OF HYDROXYSTYRENE-BASED MONOMER AND (METH)ACRYLIC ACID ESTER-BASED MONOMER, AND METHOD FOR PRODUCING SAME**

(30) Priority: 17.02.2022 JP 2022023308
(71) Applicant: Maruzen Petrochemical Co., Ltd., Tokyo 104-8502 (JP)
(72) Inventor: OIKAWA, Tomo, Ichihara-shi, Chiba 290-8503 (JP); NARITA, Azumi, Ichihara-shi, Chiba 290-8503 (JP)
(74) Representative: Regimbeau
(86) International application number: PCT/JP2023/005376
(87) International publication number: WO 2023/157901

(57) **Abstract**

To provide a method for producing a copolymer of a hydroxystyrene-based monomer and a (meth)acrylic acid ester-based monomer, in which the copolymer can be enhanced in homogeneity of the composition ratio and in yield. The present invention provides a method for producing a copolymer, including performing polymerization reaction of at least one hydroxystyrene-based monomer and at least one (meth)acrylic acid ester-based monomer in the coexistence of a radical polymerization initiator and a solvent, in which
the hydroxystyrene-based monomer is a hydroxystyrene in which the number of hydroxyl groups is any of 1 to 3 or a derivative in which at least some of hydroxyl groups in the hydroxystyrene is protected with a group dissociable by the action of acid or base, and
the polymerization reaction is performed with a consumption rate difference between the monomers being averaged under the following conditions (1) to (4),

(1) preparing a plurality of monomer solutions which each contain the hydroxystyrene-based monomer and the (meth)acrylic acid ester-based monomer and in which composition ratios of the respective monomers are different, in which
a solution in which a composition ratio of a monomer having the highest reactivity is lowest is defined as a first monomer solution and a solution in which the composition ratio of the monomer having the highest reactivity is higher than that in the first monomer solution by 5% by mol or more is defined as a n-th monomer solution (n is an integer of 2 or more), in the plurality of monomer solutions, and
an amount of the monomers contained in the first monomer solution is 5% by mol or more and 33% by mol or less based on an amount of all the monomers,

(2) initially feeding the first monomer solution to a reaction container and then sequentially feeding the n-th monomer solution into the reaction container,
(3) regulating the composition ratio of the monomer having the highest reactivity to 30% to 90% based on the composition ratio of the monomer having the highest reactivity in all the monomers, in a reaction system at the initiation of the polymerization reaction, and
(4) achieving a conversion rate of a monomer having the lowest reactivity, of 75% or more, at the completion of feeding of all the monomer solutions.

## Description

### BACKGROUND OF THE INVENTION

### Field of the Invention

The present invention relates to a copolymer of a hydroxystyrene-based monomer and a (meth)acrylic acid ester-based monomer, and a method for producing the copolymer. The present invention also relates to a copolymer used in a photoresist for semiconductor manufacturing, and a method for producing the copolymer.

### Background Art

Chemical amplification type resists, since have been adopted for KrF lithography, still continue to serve as advanced technologies, while fining of resolution proceeds sequentially to ArF lithography, EUV (extreme ultraviolet) lithography, and EB (electron beam) lithography. Examples of resist resins for KrF lithography include copolymers of 4-hydroxystyrene and monomers where hydroxy groups of 4-hydroxystyrene are protected with acid-dissociable protective groups, or copolymers of 4-hydroxystyrene and acid-dissociable group-containing (meth)acrylic monomers. In particular, the latter is expected to be also useful for EUV lithography or EB lithography. Monomers providing hydroxystyrene units, for example, 2-hydroxystyrene and 3-hydroxystyrene as isomers, and 3-4-dihydroxystyrene are lined up as promising candidates.

However, objective resolutions of EUV resists are finer by almost an order of magnitude than those of KrF resists, and thus sources of finer defects are demanded to be reduced. It is considered for such a demand that use of more homogeneous copolymers for advanced resists is effective.

Methods for producing hydroxystyrene-based polymers for photoresist use are disclosed in Patent Literature exemplified below.

For example, Patent Literature 1 indicates that a dropping polymerization method is effective for enhancing homogeneity in copolymerization of 4-acetoxystyrene serving as a precursor of a 4-hydroxystyrene structure and alicyclic (meth)acrylate containing an acid-decomposable group. When the dropping polymerization method of the Literature is adopted, there can be synthesized a copolymer having high homogeneity in which the composition distribution in the molecular weight direction is controlled within ±10% in average in GPC fractionation of the copolymer.

Patent Literature 2 and 3 indicate that a 4-hydroxystyrene-based copolymerized resin excellent for EB resists is obtained by adopting a polymerization method involving introduction of only an acid-decomposable alicyclic group-containing (meth)acrylate into a reaction container at the initiation of polymerization and then charging of other raw materials, and thereafter promoting a deprotection step, in copolymerization of a monomer of 4-hydroxystyrene protected with an acyl group or acetal group and an acid-decomposable alicyclic group-containing (meth)acrylate monomer.

Patent Literature 4 indicates that the effect of reduction in surface roughness in EUV lithography is seen by allowing vinyl ether to act on a 4-hydroxystyrene polymer to perform protection by acetalization, fractionating the resin protected, by silica gel column chromatography, and preparing a resist with only a fraction exhibiting a rate of protection close to the average value.

Patent Literature 5 indicates that a polymer enhanced in composition homogeneity, in which the composition ratio of a low molecular weight substance occupying 5% of the whole is close to the average value of the whole, is obtained by performing both precipitation purification performed with a non-polar solvent and precipitation purification performed with a polar solvent in production of a 4-hydroxystyrene-based copolymer.

In polymerization reaction for formation of (meth)acrylic copolymers for ArF resists, for example, primary or secondary ester monomers having polar groups, such as lactones, hydroxyadamantanes, and sultones, tend to be high in reactivity, whereas tertiary ester monomers having acid-decomposable groups tend to be low in reactivity. Therefore, copolymerization compositions of polymers produced by copolymerization of both these monomers are heterogeneous, and such polymers may serve as insoluble components to cause defects during development. Patent Literature 6 then discloses a method for producing a copolymer for photoresists, in which the range of variation of the monomer composition ratio of unreacted monomers is within ±15% in the polymerization reaction system during a period from the initiation of polymerization reaction until the termination of feeding of a monomer solution. Patent Literature 7 indicates that homogenization of the copolymerization composition of a polymer produced is achieved by preparing two or more monomer-dropping solutions to be fed into a reactor and changing the compositions of the dropping solutions at the later stage of polymerization from those at the initial stage of polymerization.

It is generally known with respect to copolymerization of a styrene-based monomer and a (meth)acrylic acid ester-based monomer that, when polymerization is performed by the most common method with a radical polymerization initiator under solution conditions, an ideal copolymerization composition unique to a combination of the monomers is present and the consumption rates of the monomers are substantially matched near such a composition to relatively easily lead to polymerization where the composition is homogeneous. However, production of a copolymer having a copolymerization composition ratio different from an ideal composition often causes a remarkable difference between the consumption rates of monomers. In this case, more than slight bias occurs among the compositions of respective copolymers produced at the initial stage, the middle stage, and the later stage of polymerization, even if a dropping polymerization method which easily realizes relatively homogeneous polymerization is adopted.

There is also a tendency where a monomer lower in molar ratio, present in the reaction system, is more highly reactive in copolymerization of a styrene-based monomer and a (meth)acrylic acid ester-based monomer. In this case, a monomer preferentially consumed at the initial stage of polymerization remains in only a small amount in the reaction system at the later stage of polymerization, and thus a copolymer remarkably small in composition of a highly-reactive monomer is produced particularly during an aging period after the termination of monomer feeding. While a copolymer biased in composition can be prevented from being produced by terminating reaction at the same time as the completion of feeding of monomers, the yield of such a copolymer is remarkably impaired. In addition, a polymer produced during an aging period has a relatively low molecular weight, and thus there has been focused on removal by optimization of a purification step. However, severe purification is not desirable again because of causing deterioration in yield of a copolymer.

### Citation List

### Patent Literature

[Patent Literature 1] JP 2001-151823 A
[Patent Literature 2] JP 2012-219162 A
[Patent Literature 3] JP 2012-219164 A
[Patent Literature 4] JP 2007-52193 A
[Patent Literature 5] JP 2009-102659 A
[Patent Literature 6] JP 2010-202699 A
[Patent Literature 7] WO2012/053434

### SUMMARY OF THE INVENTION

### Technical Problem

An object of the present invention is to provide a method for producing a copolymer of a hydroxystyrene-based monomer and a (meth)acrylic acid ester-based monomer, in which the copolymer can be enhanced in homogeneity of the composition ratio and in yield.

### Solution to Problem

The present inventors have found that a copolymer of a hydroxystyrene-based monomer and a (meth)acrylic acid ester-based monomer can be enhanced in homogeneity of the composition ratio and in yield by polymerization reaction with averaging of the consumption rate difference between the monomers under specified conditions in a common solution radical polymerization method, particular, a dropping polymerization method which provides a copolymer relatively high in homogeneity of the composition ratio.

Specifically, the present invention provides the followings.
[1] A method for producing a copolymer, including performing polymerization reaction of at least one hydroxystyrene-based monomer and at least one (meth)acrylic acid ester-based monomer in the coexistence of a radical polymerization initiator and a solvent, wherein
   the hydroxystyrene-based monomer is a hydroxystyrene in which the number of hydroxyl groups is any of 1 to 3 or a derivative in which at least some of hydroxyl groups in the hydroxystyrene is protected with a group dissociable by the action of acid or base, and
   the polymerization reaction is performed with a consumption rate difference between the monomers being averaged under the following conditions (1) to (4),

   (1) preparing a plurality of monomer solutions which each contain the hydroxystyrene-based monomer and the (meth)acrylic acid ester-based monomer and in which composition ratios of the respective monomers are different, wherein
      a solution in which a composition ratio of a monomer having the highest reactivity is lowest is defined as a first monomer solution and a solution in which the composition ratio of the monomer having the highest reactivity is higher than that in the first monomer solution by 5% by mol or more is defined as a n-th monomer solution (n is an integer of 2 or more), in the plurality of monomer solutions, and
      an amount of the monomers contained in the first monomer solution is 5% by mol or more and 33% by mol or less based on an amount of all the monomers,
   (2) initially feeding the first monomer solution to a reaction container and then sequentially feeding the n-th monomer solution into the reaction container,
   (3) regulating the composition ratio of the monomer having the highest reactivity to 30% to 90% based on the composition ratio of the monomer having the highest reactivity in all the monomers, in a reaction system at the initiation of the polymerization reaction, and
   (4) achieving a conversion rate of a monomer having the lowest reactivity, of 75% or more, at the completion of feeding of all the monomer solutions.
[2] The method for producing a copolymer according to [1], wherein a composition ratio of each of the monomers consumed in the polymerization reaction in a period until 1 hour from the initiation of the polymerization reaction is within ±5% by mol based on a composition ratio of each of the monomers in all the monomers.
[3] The method for producing a copolymer according to [1] or [2], including regulating a composition ratio of each of the monomers in a reaction system at the initiation of the polymerization reaction, within ±3% by mol based on a test composition ratio calculated in the following preliminary test,
   (Procedure of preliminary test)
      a dropping liquid is prepared by mixing monomers having a monomer composition of an objective copolymer, a radical polymerization initiator and a solvent, and once a solvent is loaded to a reaction container and heated up to a predetermined reaction temperature, the dropping liquid is dropped at a fixed rate over 3 hours or more and furthermore aged for 2 hours or more after the termination of dropping, and
      the progress of the polymerization reaction is sampled to measure a composition ratio of unreacted monomers in a polymerization reaction system, and determine a test composition,
   · Test composition = monomer composition ratio in amount of feeding of monomers, of 60% to 100% (termination of dropping), and steady state of composition ratio of unreacted monomers.
[4] The method for producing a copolymer according to any one of [1] to [3], wherein a composition ratio of each of the monomers consumed in polymerization in a period until the stopping of polymerization from the termination of dropping of all the monomer solutions is within ±3% by mol based on a composition ratio of all the monomers.
[5] The method for producing a copolymer according to any one of [1] to [4], wherein a composition ratio of a highly-reactive monomer in a composition ratio of each of the monomers consumed in polymerization in a period until the stopping of polymerization from the termination of dropping of all the monomer solutions is 80% or more based on a composition ratio of a highly-reactive monomer in all the monomers.
[6] The method for producing a copolymer according to any one of [1] to [5], wherein feeding rates of the monomer solutions are reduced until the termination of dropping of all the monomer solutions from any time point at which an amount of feeding the monomers is 60% by mol to 85% by mol of all the monomers.
[7] The method for producing a copolymer according to any one of [1] to [6], wherein the method is applied to production of a copolymer in which a composition ratio of the monomers consumed at any time window of the polymerization reaction in the case of polymerization performed by the same procedure as the preliminary test is deviated by ±10% or more from a composition ratio of all the monomers.
[8] The method for producing a copolymer according to any one of [1] to [7], wherein the method is applied to production of a copolymer in which a lower molar ratio is 10% by mol or more and 40% by mol or less in comparison between a molar ratio of a styrene-based monomer and that of (meth)acrylic acid ester-based monomer in an objective copolymer.
[9] The method for producing a copolymer according to any one of [1] to [8], wherein conversion rates of the monomers after the initiation of the polymerization reaction are each within ±20% based on an average value of the conversion rates of the monomers.
[10] The method for producing a copolymer according to any one of [1] to [9], wherein the hydroxystyrene-based monomer is at least one selected from the group consisting of 4-hydroxystyrene and 4-acetoxystyrene.
[11] A copolymer having a structural unit derived from at least one hydroxystyrene-based monomer and a structural unit derived from at least one (meth)acrylic acid ester-based monomer, wherein
   the hydroxystyrene-based monomer is a hydroxystyrene in which the number of hydroxyl groups is any of 1 to 3 or a derivative in which at least some of hydroxyl groups in the hydroxystyrene is protected with a group dissociable by the action of acid or base,
   a composition ratio between the hydroxystyrene-based monomer-derived structural unit and the (meth)acrylic acid ester-based monomer-derived structural unit in the copolymer is 10:90 to 45:55 or 55:45 to 90:10 in terms of molar ratio, and
   when the copolymer is subjected to gel permeation chromatography and a copolymer fraction product is fractionated to three fractions respectively having high/medium/low molecular weights so that weights of copolymers contained in the fractions are equal to one another, a monomer composition ratio of the copolymer contained in the high molecular weight fraction is within the range of ±1% relative to a monomer composition ratio of the copolymer contained in the medium molecular weight fraction and a monomer composition ratio of the copolymer contained in the low molecular weight fraction is within the range of ±2% relative to the monomer composition ratio of the copolymer contained in the medium molecular weight fraction.
[12] The copolymer according to [11], wherein the hydroxystyrene-based monomer is at least one selected from the group consisting of 4-hydroxystyrene and 4-acetoxystyrene.

### Advantageous Effect of Invention

The present invention can provide a method for producing a copolymer of a hydroxystyrene-based monomer and a (meth)acrylic acid ester-based monomer, in which the copolymer can be enhanced in homogeneity of the composition ratio and in yield. The production method of the present invention can provide the copolymer suitable for the state-of-the-art generation of semiconductor resists.

### DETAILED DESCRIPTION OF THE INVENTION

### [Method for producing copolymer]

At least one hydroxystyrene-based monomer and at least one (meth)acrylic acid ester-based monomer are used in the method for producing a copolymer of the present invention.

### (Hydroxystyrene-based monomer)

The hydroxystyrene-based monomer for use in the method for producing a copolymer of the present invention is a hydroxystyrene in which the number of hydroxyl groups is any of 1 to 3, or a derivative in which at least some of hydroxyl groups in the hydroxystyrene is protected with a group dissociable by the action of acid or base. Specific examples of the hydroxystyrene-based monomer include 4-hydroxystyrene, 3-hydroxystyrene, 2-hydroxystyrene, 3,4-dihydroxystyrene, and trihydroxystyrene.

The protective group of the hydroxystyrene derivative is preferably an acyl group. Examples include 4-acetoxystyrene in which a hydroxyl group of 4-hydroxystyrene is protected with an acyl group. 4-Acetoxystyrene is generally available in an industrial scale, as a high-purity product suited in photoresist use. A method of use involves forming a copolymer of a derivative protected with an acyl group, such as 4-acetoxystyrene, and a (meth)acrylic acid ester by a radical polymerization method. Thereafter, this copolymer is deprotected by an acid or base catalyst, to obtain an objective copolymer of hydroxystyrene and a (meth)acrylic acid ester. In recent years, 2-acetoxystyrene and 3-acetoxystyrene as isomers have also been industrially available. Such an isomer can be used as a raw material to allow a copolymer having a 2-hydroxystyrene structure or a 3-hydroxystyrene structure to be again synthesized.

An acetal group can also be utilized as other protective group of the hydroxystyrene derivative. Examples include 4-ethoxyethoxystyrene in which a hydroxyl group of 4-hydroxystyrene is protected with an acetal group. A method of use also in the case of use of an acetal group similarly involves forming a copolymer of a derivative protected with an acetal group, such as 4-ethoxyethoxystyrene, and a (meth)acrylic acid ester by a radical polymerization method. Thereafter, this copolymer is deprotected by an acid catalyst to obtain an objective copolymer of hydroxystyrene and a (meth)acrylic acid ester. An advantage of such an acetal type is, for example, that deprotection reaction by an acid catalyst can be performed under mild conditions and side reaction in a deprotection step can be suppressed.

Examples of other protective groups of the hydroxystyrene derivative include a t-butyl group and a t-butoxycarbonyl group. While such protective groups are acid-decomposable and slightly severe conditions are needed for deprotection, the above synthesis scheme can be applied depending on the type of a (meth)acrylic acid ester to be copolymerized and the constitution of the copolymer.

### ((Meth)acrylic acid ester-based monomer)

The (meth)acrylic acid ester-based monomer for use in the method for producing a copolymer of the present invention can be a known compound conventionally used for photoresists. The (meth)acrylic acid ester means an acrylic acid ester and a methacrylic acid ester.

In particular, in the case of a chemical amplification type resist, a compound is preferably used in which a carboxyl group of acrylic acid or methacrylic acid is protected with an acid-dissociable group, and the acid-dissociable group is desirably a tertiary hydrocarbon group or a group forming an acetal structure. Specific examples include saturated hydrocarbon groups such as a tert-butyl group, a tert-amyl group, a 1-methyl-1-cyclopentyl group, a 1-ethyl-1-cyclopentyl group, a 1-methyl-1-cyclohexyl group, a 1-ethyl-1-cyclohexyl group, a 2-methyl-2-adamantyl group, a 2-ethyl-2-adamantyl group, a 2-propyl-2-adamantyl group, a 2-(1-adamantyl)-2-propyl group, an 8-methyl-8-tricyclo[5.2.1.02,6]decanyl group, an 8-ethyl-8-tricyclo[5.2.1.02,6]decanyl group, an 8-methyl-8-tetracyclo[4.4.0.12,5.17,10]dodecanyl group and an 8-ethyl-8-tetracyclo[4.4.0.12,5.17,10]dodecanyl group; and oxygen-containing hydrocarbon groups such as a 1-methoxyethyl group, a 1-ethoxyethyl group, a 1-iso-propoxyethyl group, a 1-n-butoxyethyl group, a 1-tert-butoxyethyl group, a 1-cyclopentyloxyethyl group, a 1-cyclohexyloxyethyl group, a 1-tricyclo[5.2.1.02,6]decanyloxyethyl group, a methoxymethyl group, an ethoxymethyl group, iso-propoxymethyl group, a n-butoxymethyl group, a tert-butoxymethyl group, a cyclopentyloxymethyl group, a cyclohexyloxymethyl group, a tricyclo[5.2.1.02,6]decanyloxymethyl group, a 2-tetrahydrofuranyl group and a 2-tetrahydropyranyl group.

A (meth)acrylic acid ester having a structure containing a polar group is also preferable in order to increase adhesiveness to a semiconductor substrate and the like, and adjust the solubility in a lithography solvent or an alkaline developer. Examples of the polar group include a group having a lactone structure, an alcoholic hydroxyl group, a group having an ether structure, and a nitrile group. In particular, a group having a lactone structure or an alcoholic hydroxyl group is preferred. Specific examples of the group having a lactone structure include lactone structure-containing substituents such as γ-butyrolactone, γ-valerolactone, δ-valerolactone, 1,3-cyclohexanecarbolactone, 2,6-norbornanecarbolactone, 4-oxatricyclo[5.2.1.02,6]decan-3-one, and mevalonic acid δ-lactone. Specific examples of the alcoholic hydroxyl group include hydroxyalkyl groups such as a hydroxymethyl group, a hydroxyethyl group, a hydroxypropyl group, a 3-hydroxy-1-adamantyl group and a 3,5-dihydroxy-1-adamantyl group.

There can also be, if necessary, used a compound in which a carboxyl group of (meth)acrylic acid is protected with a group inhibited from being dissolved in an alkaline developer and not dissociated by the action of acid, in order to adjust the solubility in a lithography solvent or an alkaline developer. Specific examples include a methyl group, an ethyl group, a cyclopentyl group, a cyclohexyl group, an isobornyl group, a 1-adamantyl group, a 2-adamantyl group, a tricyclo[5.2.1.02,6]decanyl group, a tetracyclo[4.4.0.12,5.17,10]dodecyl group, a benzyl group, and a 9-anthracenemethyl group.

### (Polymerization step)

The polymerization step is to perform polymerization reaction of at least one hydroxystyrene-based monomer and at least one (meth)acrylic acid ester-based monomer in the coexistence of a radical polymerization initiator and a solvent, in which the polymerization reaction is performed with the consumption rate difference between the monomers being averaged under the following conditions (1) to (4). Thus, the copolymer of a hydroxystyrene-based monomer and a (meth)acrylic acid ester-based monomer can be enhanced in homogeneity of the composition ratio and in yield.

· Condition (1): preparing a plurality of monomer solutions which each contain the hydroxystyrene-based monomer and the (meth)acrylic acid ester-based monomer and in which the composition ratios of the respective monomers are different.

Here, a solution in which the composition ratio of a monomer having the highest reactivity is lowest is defined as a first monomer solution and a solution in which the composition ratio of the monomer having the highest reactivity is higher than that in the first monomer solution by 5% by mol or more is defined as a n-th monomer solution (n is an integer of 2 or more), in the plurality of monomer solutions. For example, when the first monomer solution to a fourth monomer solution are prepared (namely, when n is 4) as the plurality of monomer solutions, the composition ratios of the highly-reactive monomers contained in the second monomer solution, the third monomer solution, and the fourth monomer solution are higher than that in the first monomer solution by 5% by mol or more, preferably higher by 5% by mol or more and 20% by mol or less, more preferably higher by 5% by mol or more and 15% by mol or less. In addition, n is preferably 2, 3, or 4, more preferably 2 or 3, further preferably 2.

When the styrene-based monomer and the (meth)acrylate-based monomer are copolymerized, a monomer lower in molar ratio, present in the reaction system, tends to be higher in polymerization rate in many cases. It is presumed in the present invention that the composition ratio of the monomer having the highest reactivity in the first monomer solution fed at the initial stage of polymerization is set to be lower than a target composition (the composition ratio of each of the monomers in all the monomers) and the composition ratio of the monomer having the highest reactivity in the second monomer solution is set to be higher than the target composition by 5% by mol or more, thereby resulting in an increase in composition ratio of a high-reactive monomer and a decrease in composition ratio of a low-reactive monomer in the polymerization reaction system in a period from the middle stage of polymerization reaction until the termination of dropping, and thus increases in polymerization rates and conversion rates of the monomers.

The amount of the monomers contained in the first monomer solution is 5% by mol or more and 33% by mol or less, preferably 8% by mol or more and 30% by mol or less, more preferably 10% by mol or more and 25% by mol or less based on the amount of all the monomers.

The amount of the monomers contained in the first monomer solution is regulated within the above range, and thus the composition ratio of each monomer in a monomer solution is modified at least once in a period in which the amount of feeding of the monomer solution to a reaction container at the initial stage of polymerization is 5% by mol or more and 33% by mol or less. In order to achieve a state (steady state) in which the consumption rates of the respective monomers are averaged, from the initial stage of polymerization, the first monomer solution in which the composition ratio of the monomer having the highest reactivity is low is first fed to a reaction container, and then such feeding is switched to feeding of a second monomer solution in which the composition ratio of the monomer having the highest reactivity is higher than that in the first monomer solution by 5% by mol or more. This switching enables the consumption rates of the monomer having the highest reactivity and the monomer having the lowest reactivity to be averaged and enables the monomer composition ratio of a copolymer generated to be closer to the composition ratio of each of the monomers in all the monomers.

· Condition (2): initially feeding the first monomer solution to a reaction container and then sequentially feeding the n-th monomer solution into the reaction container.

The method for feeding the first monomer solution to the reaction container is not particularly limited, and the entire amount of the first monomer solution may be initially loaded at one time, a portion of the first monomer solution may be loaded and the balance thereof may be dropped, or the entire amount of the first monomer solution may be dropped, into the reaction container. A solvent may also be loaded into the reaction container in advance.

The n-th monomer solution is preferably fed to the reaction container by dropping, and the second monomer solution, the third monomer solution, and the fourth monomer solution are sequentially dropped after the completion of feeding of the first monomer solution.

· Condition (3): regulating the composition ratio of the monomer having the highest reactivity to 30% to 90% based on the composition ratio of the monomer having the highest reactivity in all the monomers, in the reaction system at the initiation of the polymerization reaction.

The composition ratio of the monomer having the highest reactivity in the reaction system at the initiation of the polymerization reaction is preferably 40% to 85%, more preferably 50% to 80% based on the composition ratio of the monomer having the highest reactivity in all the monomers. The composition ratio of the monomer having the highest reactivity in the reaction system at the initiation of the polymerization reaction can be regulated within the above numerical value range, thereby resulting in suppression of production of any copolymer having a composition ratio deviated from the target and an enhancement in homogeneity of the composition ratio of the copolymer.

The composition ratio of each of the monomers consumed in the polymerization reaction in a period until 1 hour from the initiation of the polymerization reaction is preferably regulated so as to be within ±5% by mol, more preferably within±4% by mol based on the composition ratio of each of the monomers in all the monomers. The consumption rates of the respective monomers can be averaged at the initial stage of polymerization, thereby resulting in an enhancement in homogeneity of the composition ratio of the copolymer and an enhancement in yield.

It is effective therefor to regulate the composition ratio of each of the monomers in the reaction system at the initiation of the polymerization reaction within ±3% by mol based on the test composition ratio calculated in the following preliminary test.

### (Procedure of preliminary test)

A dropping liquid is prepared by mixing monomers having a monomer composition of an objective copolymer, a radical polymerization initiator, and a solvent. Once a solvent is loaded to a reaction container and heated up to a predetermined reaction temperature, the dropping liquid is dropped at a fixed rate over 3 hours or more and furthermore aged for 2 hours or more after the termination of dropping.

The progress of the polymerization reaction is sampled to measure the composition ratio of unreacted monomers in a polymerization reaction system, and determine a test composition.
· Test composition = monomer composition ratio in amount of feeding of monomers, of 60% to 100% (termination of dropping), and steady state of composition ratio of unreacted monomers. Herein, the "steady state" refers to a state where the composition ratio of unreacted monomers is fixed or approximately fixed.

· Condition (4): achieving a conversion rate of a monomer having the lowest reactivity, of 75% or more, at the completion of feeding of all the monomer solutions.

The conversion rate of the monomer having the lowest reactivity is preferably 77% or more at the completion of feeding of all the monomer solutions. The conversion rate of the monomer having the lowest reactivity can be regulated so as to be more than the above numerical value, thereby averaging the consumption rates of the respective monomers to provide a copolymer high in homogeneity of the composition ratio and enhance the yield. In addition, a copolymer whose weight average molecular weight and molecular weight distribution are regulated to the targets is easily obtained.

The conversion rate of the monomer having the highest reactivity is preferably 80% or more, more preferably 85% or more at the completion of feeding of all the monomer solutions.

The composition ratio of each of the monomers consumed by polymerization in a period from the termination of dropping of all the monomer solutions to the stopping of polymerization is preferably within ±3% by mol based on the composition ratio of all the monomers. Such a condition can be satisfied, thereby averaging the consumption rates of the respective monomers to provide a copolymer high in homogeneity of the composition ratio and enhance the yield.

The composition ratio of a highly-reactive monomer in the composition ratio of each of the monomers consumed in polymerization in a period until the stopping of polymerization from the termination of dropping of all the monomer solutions is preferably 80% or more based on the composition ratio of a highly-reactive monomer in all the monomers. Such a condition can be satisfied, thereby resulting in a reduction in consumption of the monomers after the stopping of polymerization and suppression of production of any copolymer biased in composition ratio.

It is preferable to reduce the feeding rate of a monomer solution until the completion of dropping of the monomer solution from any time point at which the amount of feeding the monomers is 60% by mol to 85% by mol of all the monomers. The dropping time can be elongated, thereby resulting in an increase in conversion rate at the termination of monomer feeding. The time until the completion of dropping of all the monomer solutions can be elongated to keep the steady state of polymerization reaction longer and increase the conversion rates of the monomers at the completion of dropping of all the monomer solutions. As a result, a copolymer high in homogeneity of the composition ratio can be obtained and the yield can be enhanced.

Preferred is an application to production of a copolymer in which the composition ratio of the monomers consumed at any time window of the polymerization reaction in the case of polymerization performed by the same procedure as the preliminary test is deviated by ±10% or more from the composition ratio of all the monomers. In the case of polymerization at such a monomer composition ratio, the effects of the present invention are much more exerted.

In addition, preferred is an application to production of an objective copolymer in which the lower molar ratio is 10% by mol or more and 40% by mol or less in comparison between the molar ratio of a styrene-based monomer and that of (meth)acrylic acid ester-based monomer in the copolymer. In the case of polymerization at such a monomer composition ratio, the effects of the present invention are much more exerted.

The conversion rates of the respective monomers after the initiation of the polymerization reaction are each preferably within ±20% based on the average value of the conversion rates of the respective monomers. Such a condition can be satisfied, thereby resulting in a reduction in consumption of the monomers after the stopping of polymerization and suppression of production of any copolymer biased in composition ratio.

Other polymerization conditions can be set with reference to a method for producing a polymer for resists by known radical polymerization.

The solvent for use in the method for producing a copolymer of the present invention is not particularly limited as long as it can stably dissolve the monomers, a polymerization initiator, a chain transfer agent, and a polymerization reaction product. Specific examples of the polymerization solvent can include ketones such as acetone, methyl ethyl ketone, methyl isobutyl ketone, methyl isoamyl ketone, methyl amyl ketone and cyclohexanone; alcohols such as methanol, ethanol and isopropanol; ether alcohols such as ethylene glycol monomethyl ether, ethylene glycol monoethyl ether, propylene glycol monomethyl ether and propylene glycol monoethyl ether; esters such as methyl acetate, ethyl acetate, isopropyl acetate, propyl acetate, butyl acetate, methyl propionate, methyl lactate and ethyl lactate; ether esters such as ethylene glycol monomethyl ether acetate, ethylene glycol monoethyl ether acetate, propylene glycol monomethyl ether acetate and propylene glycol monoethyl ether acetate; ethers such as tetrahydrofuran, 1,4-dioxane and ethylene glycol dimethyl ether; aromatic hydrocarbons such as toluene and xylene; N,N-dimethylformamide, and acetonitrile. The amount of the polymerization solvent used is not particularly limited, and can be appropriately selected depending on the viscosity of the polymerization reaction system, the conversion rates of the monomers, and the like.

The radical polymerization initiator for use in the method for producing a copolymer of the present invention can be conventionally known one. The radical polymerization initiator here used can be, for example, an azo-based polymerization initiator or a peroxide-based polymerization initiator. Specific examples of the azo-based polymerization initiator can include 2,2'-azobisisobutyronitrile, 2,2'-azobis(2-methylbutyronitrile), dimethyl2,2'-azobis(2-methylpropionate), 1,1'-azobis(cyclohexane-1-carbonitrile), and 4,4'-azobis(4-cyanovaleric acid). A polymerization initiator of an azo-based compound is preferable because of being excellent in safety of handling. Specific examples of the peroxide-based polymerization initiator can include decanoyl peroxide, lauroyl peroxide, benzoyl peroxide, bis(3,5,5-trimethylhexanoyl)peroxide, succinic acid peroxide, tert-butyl peroxy-2-ethylhexanoate, tert-butyl peroxypivalate, and 1,1,3,3-tetramethylbutyl peroxy-2-ethylhexanoate. These polymerization initiators can be used singly, or mixed and then used. The amount of the polymerization initiator used can be appropriately selected depending on the intended molecular weight, the types of the monomers, the polymerization initiator, the chain transfer agent, the solvent, and the like, the structural unit composition, the polymerization temperature, the dropping rate, and the like.

The feeding procedure of the polymerization initiator to the reaction container may be feeding as a mixture with any monomer solution, or may be separate feeding from any monomer solution. The initial stage may be made by loading a solution including the polymerization initiator to the reaction container in advance, or charging the solvent to the reaction container in advance and feeding the polymerization initiator after heating of the solvent. The order of feeding of the polymerization initiator may be any order where such feeding is made before, at the same time as, or after feeding of the monomer solutions. Herein, feeding of the polymerization initiator may be initiated before the amount of feeding of the monomer solutions reaches 33% by mol of the amount of all the monomers, and the polymerization reaction may be then initiated. In the present invention, the polymerization reaction can be initiated before the amount of feeding of the monomer solutions reaches 33% by mol of the amount of all the monomers, thereby keeping the steady state longer. As a result, a copolymer high in homogeneity of the composition ratio can be obtained and the yield can be enhanced.

The dropping time of the monomer solutions is not particularly limited, and is usually selected from the range from 1 to 12 hours, preferably 2 hours to 10 hours, more preferably from 4 hours to 8 hours from the viewpoint of allowing the production efficiency to be maintained with the steady state of the polymerization reaction being kept for long. The dropping rate of the monomers is preferably reduced in the course of dropping of solutions of second- and higher monomers. Specifically, the dropping rate of the monomers is preferably reduced in a period from the time point at which the amount of feeding of the monomers reaches any of 60% by mol to 85% by mol of the amount of all the monomers, to the completion of dropping of the monomer solutions. The dropping rate can be reduced to elongate the polymerization time during dropping and increase the conversion rates of the respective monomers, thereby allowing the conversion rate of the monomer having the lowest reactivity at the termination of dropping of all the monomers to be 75% or more, and enhancing the yield of a copolymer favorable in composition homogeneity.

After the termination of feeding of the monomer solutions by a dropping polymerization method, the remaining unreacted monomers are preferably allowed to react by aging with maintaining of the temperature for a certain time, an additional temperature rise, or the like. The aging time is not particularly limited, and can be appropriately selected from the viewpoint of allowing the copolymer to maintain homogeneity of the composition ratio and the production efficiency.

The polymerization temperature can be appropriately selected depending on the boiling points of the solvent, the monomers, the chain transfer agent, and the like, the half-life temperature of the polymerization initiator, and the like. The polymerization temperature is preferably 40 to 160°C, particularly preferably 60 to 120°C from the viewpoint of the production efficiency, and stability of the monomers and the copolymer.

The polymerization pressure is not particularly limited, may be any of normal pressure, increased pressure or reduced pressure, and is usually normal pressure. In the case of an azo-based polymerization initiator, nitrogen gas is generated and thus polymerization is preferably made at about atmospheric pressure with an open system as the polymerization system in order to suppress the variation in polymerization pressure.

### (Other step(s))

The method for producing a copolymer of the present invention can include other step(s) than the above polymerization step. Hereinafter, such other step(s) are also specifically described.

### (Deprotection step)

In a case where a derivative in which at least some of hydroxyl groups is protected is used as the hydroxystyrene-based monomer in the method for producing a copolymer of the present invention, deprotection reaction is performed after polymerization in order to express a hydroxystyrene unit. The deprotection reaction is performed with an acid or base catalyst depending on the type of the protective group. The deprotection reaction may be performed by addition of acid or base to a polymerization reaction liquid, or may be performed after purification of a polymerization reaction liquid by precipitation purification or the like described below.

In a case where the deprotection reaction is performed by addition of acid or base to a polymerization reaction liquid, a large amount of unreacted monomers usually remain and thus monomer-derived side reaction is feared. In the present invention, the amount of the remaining unreacted monomers in the polymerization reaction liquid is reduced as much as possible, and thus side reaction in deprotection reaction can be suppressed.

### (Purification step)

The solution of the copolymer obtained in the polymerization step in the present invention is subjected to a purification step subsequent to polymerization or deprotection. The polymer after polymerization reaction includes low molecular weight impurities, for example, the polymerization solvent, the unreacted monomers, an oligomer, the polymerization initiator and the chain transfer agent, and a reaction by-product thereof, and furthermore includes a deprotection catalyst and a by-product of deprotection reaction in a case where the deprotection step is performed before purification. Therefore, these are preferably removed by a purification step. Specifically, the purification step is performed by precipitation purification involving diluting a crude solution of the copolymer, if necessary, by addition of a good solvent, and then precipitating the copolymer by contact with a poor solvent to extract and separate impurities in a poor solvent phase, or forming liquid-liquid two phases and then extracting impurities in a poor solvent phase. These operations may be performed by repeating the same operation or combining different operations.

Examples of the poor solvent used for precipitation purification can include hydroxyl group-containing compounds such as water, methanol, ethanol, isopropanol, ethylene glycol and ethyl lactate, linear, branched or cyclic saturated hydrocarbons such as n-hexane, iso-hexane, n-heptane, cyclopentane and methylcyclohexane, or aromatic hydrocarbons such as toluene and xylene. These solvents can be each used singly, or can be used as a mixture of two or more kinds thereof. Examples of the good solvent can include polymerization solvents described above and resist solvents described below.

### (Step of removal of metal impurities-foreign substances)

A step of removing trace amounts of metal impurities and foreign substances contained in the copolymer may be performed. The method therefor may involve washing a solution in which the copolymer is dissolved in an organic solvent, with pure water, or may involve bringing the solution into contact with an ion-exchange resin or allowing the solution to flow through a filter having ion exchangeability. A combination of such methods may also be performed. The ion-exchange resin or the filter having ion exchangeability, here used, can be known commercially available one used for metal removal of a polymer for resists.

### (Step of solvent replacement-concentration under reduced pressure)

The solvent of the copolymer solution is preferably replaced with a solvent used for resist compositions. Such solvent replacement can be performed by heating the polymer solution under reduced pressure to distill off any low-boiling point substance, for example, the solvent used for purification, and feeding a solvent for resists thereto and also simultaneously distilling off the solvent at the initial stage and the solvent fed, together. Low-boiling point impurities, for example, the solvent used in purification, can be removed to allow the copolymer to be made as a solution suitable for preparation of a resist composition.

The solvent for replacement is not particularly limited as long as it dissolves the copolymer, and in the case of resist use, a known solvent usually used for resist compositions can be used. Specific examples include solvents such as propylene glycol monomethyl ether acetate, propylene glycol monomethyl ether, propylene glycol n-butyl ether, dipropylene glycol n-propyl ether, dipropylene glycol n-butyl ether, ethyl lactate, methyl amyl ketone, γ-butyrolactone, cyclohexanone and 4-methyl-2-pentanol.

### [Copolymer]

### (Composition ratio)

The copolymer of the present invention has a structural unit derived from at least one hydroxystyrene-based monomer and a structural unit derived from at least one (meth)acrylic acid ester-based monomer. The composition ratio between the hydroxystyrene-based monomer-derived structural unit and the (meth)acrylic acid ester-based monomer-derived structural unit in the composition in the copolymer is 10:90 to 45:55 or 55:45 to 90:10, preferably, 15:85 to 45:55 or 55:45 to 85:15 on molar basis. Herein, the composition ratio between the structural units in the polymer can be analyzed by ¹³C-NMR, and can be measured under measurement conditions described below.

### (Weight average molecular weight-molecular weight distribution)

The weight average molecular weight (Mw) and the molecular weight distribution (Mw/Mn) of the copolymer of the present invention are not particularly limited, and can be appropriately set depending on the intended use. For example, the weight average molecular weight (Mw) of the copolymer is preferably 1,000 to 50,000, more preferably 2,000 to 30,000, further preferably 3,000 to 20,000, still more preferably 4,000 to 10,000 from the viewpoint of exhibition of polymer properties. The molecular weight distribution (Mw/Mn) of the copolymer is preferably 1.1 or more and 2.0 or less, more preferably 1.2 or more and 1.80 or less, further preferably 1.3 or more and 1.7 or less from the viewpoint of homogenization of properties of the copolymer.

In the present invention, the weight average molecular weight (Mw) and the molecular weight distribution (Mw/Mn) of the copolymer are values measured by GPC (gel permeation chromatography), and can be measured under measurement conditions described below.

### (Method for evaluating homogeneity of copolymer)

Examples of the method for evaluating homogeneity of the copolymer of the present invention include a method involving subjecting the copolymer to gel permeation chromatography (GPC) and fractionating a copolymer fraction product to three fractions respectively having high/medium/low molecular weights so that weights of copolymers contained in the fractions are equal to one another, and determining the monomer composition ratio (% by mol) of the copolymer contained in each of the fractions, by a method such as ¹³C-NMR. The above copolymer fraction product does not include any low-molecular weight fraction product such as the solvent and the remaining monomer(s). As the values of the monomer composition ratios in the respective fractions are closer to one another, homogeneity of the copolymer can be evaluated to be higher. According to the present invention, a copolymer can be obtained in which the monomer composition ratio of the copolymer contained in the high molecular weight fraction is within the range of ±1% relative to the monomer composition ratio of the copolymer contained in the medium molecular weight fraction and the monomer composition ratio of the copolymer contained in the low molecular weight fraction is within the range of ±2% relative to the monomer composition ratio of the copolymer contained in the medium molecular weight fraction.

### EXAMPLES

Abbreviations of compounds used in the following experiments are as follows.
PACS: p-acetoxystyrene
4-HS: 4-hydroxystyrene
MCPMA: 1-methyl-1-cyclopentyl methacrylate
ECPMA: 1-ethyl-1-cyclopentyl methacrylate
MEK: methyl ethyl ketone
MTBE: methyl tert-butyl ether
PGME: propylene glycol monomethyl ether

### [Measurement methods]

### [Weight average molecular weight-molecular weight distribution of copolymer]

The weight average molecular weight (Mw) and the molecular weight distribution (Mw/Mn) of the copolymer were measured by GPC (gel permeation chromatography), with polystyrene as a standard product.
Measurement apparatus: HLC-8220GPC manufactured by Tosoh Corporation
Detector: differential refractive index (RI) detector
Column: Shodex GPC KF804 × 3 columns (manufactured by SHOWA DENKO K.K.)
Eluent: tetrahydrofuran
Flow rate: 1.0 mL/min
Temperature: 40°C
Calibration curve: created with polystyrene standard sample (Manufactured by Tosoh Corporation)

### [Monomer concentration]

The monomer concentration was measured by GC (gas chromatography).
Measurement apparatus: GC-2010plus manufactured by Shimadzu Corporation
Carrier gas: N₂
Detector: FID
Column: DB-5 (15 m) manufactured by Agilent J&W

### [Fractionation of copolymer]

The copolymer was subjected to GPC to fractionate a copolymer fraction product to three fractions respectively having high/medium/low molecular weights so that weights of copolymers contained in the fractions are equal to one another.
Measurement apparatus: LC-Forte/R manufactured by YMC CO., LTD.
Detector: differential refractive index (RI) detector
Column: YMC-GPCT60000 manufactured by YMC CO., LTD.
Eluent: MEK

### [Composition ratio of monomers in copolymer]

The composition ratio of monomers in the copolymer was analyzed by ¹³C-NMR.
Measurement apparatus: AV400 manufactured by Bruker
Deuterated solvent: acetone-d6
Relaxation reagent: chromium(III) acetylacetonate
Measurement temperature: 40°C

### [Reference Example 1]

### (Synthesis of 4-HS/MEK solution)

A 100-L glass lining reaction container equipped with a thermometer, a cooling tube and a stirring apparatus was charged with 7.9 kg of PACS and 23.4 kg of methanol, and sealed with nitrogen. The content was cooled under stirring, and the liquid temperature was -5°C. Thereafter, an operation including a reduction in pressure of the inside of the reaction container and then recover of the pressure by nitrogen was repeated three times. An equimolar amount of an aqueous 3 M sodium hydroxide solution, relative to PACS, was prepared in a container different from the reaction container, and the aqueous solution was bubbled with nitrogen for 1 hour. The aqueous sodium hydroxide solution bubbled with nitrogen was dropped into the reaction container over 100 minutes, and reaction for conversion of PACS to 4-HS by deprotection was performed by continuous stirring for 30 minutes after dropping.

Next, 0.97 molar equivalent of 6 M hydrochloric acid, relative to PACS used, was dropped into the reaction container over 60 minutes, and the reaction liquid was neutralized with continuous stirring for 30 minutes after dropping. Here, 6 M hydrochloric acid was bubbled with nitrogen for 1 hour in advance and then dropped. Next, the temperature of the reaction liquid after neutralization was raised to about 10 to 20°C, 3 times the mass of MTBE, relative to PACS, was charged thereto, and stirred for 15 minutes and left to still stand for 15 minutes, and a water layer was discharged. Next, 3 times the mass of ion-exchange water, relative to PACS, was charged, and stirred for 15 minutes and left to still stand for 15 minutes, and then a water layer was discharged. Next, 2 times the mass of MTBE and 3 times the mass of ion-exchange water, relative to PACS, were charged, and stirred for 15 minutes and left to still stand for 15 minutes, and a water layer was discharged. Finally, an operation in which 3 times the mass of ion-exchange water, relative to PACS, was charged, and stirred for 15 minutes and left to still stand for 15 minutes, and a water layer was discharged was repeated twice.

An organic layer after washing with water was transferred to a different 100-L reaction container, and 13 times the mass of MEK, relative to the initial PACS, was charged. Distillation under reduced pressure was performed at 5 kPa and 25°C to distill off organic impurities other than 4-HS, such as tert-butyl methyl ether and a reaction by-product, and excess MEK, and a solution having a 4-HS concentration of 25% by mass was finally made. Thereafter, the solution was allowed to flow through a polytetrafluoroethylene (PTFE) hollow fiber filter having a pore size of 50 nm, and thus 21 kg of a 24.9% by mass 4-HS/MEK solution was obtained.

### [Comparative Example 1]

### (Preliminary test of Example 1)

To a container were added 56.6 g of the 4-HS/MEK solution in Reference Example 1, 78.9 g of MCPMA, 12.4 g of dimethyl 2,2-azobisisobutyrate as a polymerization initiator, and 73.9 g of MEK, and these were mixed to prepare a monomer solution. The molar ratio between 4-HS and MCPMA was 20:80.

A 500-mL four-necked flask reaction container made of glass, equipped with a stirrer, a condenser and a thermometer, was loaded with 78.0 g of MEK, and the resultant was set under a nitrogen atmosphere and then heated to 79°C. Subsequently, the monomer solution was dropped and fed to the reaction container at a fixed rate over 4 hours, and reaction was further continued (aged) for 2 hours after the termination of dropping. The temperature in the polymerization reaction was controlled to 79.0 to 80.0°C, and cooled to room temperature after the termination of polymerization.

The solution in the reaction container was partially sampled every 1 hour during polymerization reaction, and the concentration of unreacted monomers was measured by GC, and the weight average molecular weight (Mw) and the molecular weight distribution (Mw/Mn) of the copolymer were measured by GPC. The monomer conversion rate (based on the total amount fed) and the molar ratio of the unreacted monomers, at each sampling time, were determined from the amount of feeding of the monomers until each sampling time and the change in concentration of unreacted monomers over time. The same data was used to calculate the molar ratio of each monomer consumed every 1 hour. The measurement results and the calculation results are shown in Tables 1 and 2.

**[Table 1]**

| Comparative Example 1 | | | | | | | |
|---|---|---|---|---|---|---|---|
| Time/h | Monomer conversion rate/% | | | Molar ratio of monomer in system/% | | Mw | Mw/Mn |
| | 4-HS | MCPMA | Average | 4-HS | MCPMA | | |
| 1 | 9.8 | 7.3 | 7.8 | 17.7 | 82.3 | 4,300 | 1.72 |
| 2 | 35.0 | 25.0 | 27.0 | 13.0 | 87.0 | 5,300 | 1.72 |
| 3 | 62.8 | 48.7 | 51.5 | 10.4 | 89.6 | 5,200 | 1.71 |
| 4 (at termination of dropping) | 90.3 | 77.0 | 79.6 | 9.5 | 90.5 | 5,000 | 1.71 |
| 5 | 97.8 | 90.1 | 91.6 | 5.3 | 94.7 | 4,700 | 1.74 |
| 6 | 98.7 | 95.1 | 95.8 | 6.2 | 93.8 | 4,600 | 1.80 |

**[Table 2]**

| Comparative Example 1 O Time window VS Monomer consumed | | |
|---|---|---|
| Time/h | Monomer consumed, molar ratio/% | |
| | 4-HS | MCPMA |
| 0-1 | 25.0 | 75.0 |
| 1-2 | 26.3 | 73.7 |
| 2-3 | 22.7 | 77.4 |
| 3-4 | 19.6 | 80.4 |
| 4-5 | 12.4 | 87.6 |
| 5-6 | 4.5 | 95.5 |

While the molar ratio between 4-HS and MCPMA fed was 20:80, the composition of unreacted 4-HS was 17.7 to 13.0% by mol and the composition of 4-HS consumed per hour was more than 25% by mol in the system at the initial stage of polymerization, and it was thus found that 4-HS was high in polymerizability, namely, was a highly-reactive monomer. Thereafter, the composition of 4-HS in the polymerization system was 10.4 to 9.5% by mol and almost a steady state was achieved in a time window of 3 hours to 4 hours, and the compositions of 4-HS and MCPMA consumed in this period satisfied 19.6:80.4, and it was thus considered that a copolymer having a molar ratio closer to that (20:80) between the monomers fed was produced. After the termination of feeding of all the monomer solutions, the molar ratio between the monomers consumed per unit time gradually deviated considerably from 20:80 for an aging time of 2 hours, and it was confirmed that a copolymer extremely high in composition of MCPMA was produced.

### [Example 1]

### (Preparation of first monomer solution)

The monomer composition of the first monomer solution was the same as the monomer composition (4-HS: MCPMA = 10.4:89.6) in the reaction system at a time point of 3 hours after the initiation of polymerization, at which reaction was almost in a steady state in the preliminary test (Comparative Example 1), and the monomers contained in the first monomer solution were set to be at 18% by mol relative to all the monomers. To a container were added 5.2 g of a 25% by mass 4-HS/MEK solution, 15.7 g of MCPMA, 2.2 g of dimethyl 2,2-azobisisobutyrate as a polymerization initiator, and 13.2 g of MEK, and these were mixed to provide the first monomer solution.

### (Preparation of second monomer solution)

To a different container were added 51.4 g of the same 4-HS/MEK solution, 63.2 g of MCPMA, 10.2 g of dimethyl 2,2-azobisisobutyrate as a polymerization initiator, and 60.7 g of MEK, and these were mixed to provide the second monomer solution. The composition ratio of each of the monomers in the second monomer solution satisfied 4-HS: MCPMA = 22.1:87.9, and the molar composition of 4-HS as a highly-reactive monomer was higher than that in the first monomer solution by 5% by mol or more. Here, the respective totals of the monomers and those of the polymerization initiators contained in the first monomer solution and the second monomer solution were the same as the amounts used in the preliminary test (Comparative Example 1).

Next, a 500-mL four-necked flask reaction container made of glass, equipped with a stirrer, a condenser, and a thermometer, was loaded with 78.0 g of MEK, and the resultant was set under a nitrogen atmosphere and then heated to 79°C. The first monomer solution was dropped and fed thereto at a fixed rate over 43 minutes, subsequently the dropping rate of the second monomer solution was set so as to be the same as the dropping rate of the first monomer solution on molar basis of the monomers, and the second monomer solution was dropped and fed for 2 hours and 17 minutes. Dropping of 75% of all the monomers was completed at 3 hours from the initiation of monomer feeding. The dropping rate of the second monomer solution was reduced to one-half at 3 hours, and the balance was dropped over 2 hours. The total dropping time was 5 hours. Thereafter, reaction was continued for 1 hour. The temperature in the polymerization reaction was controlled to 79.0 to 80.0°C, and then cooled to room temperature after the termination of polymerization.

The solution in the reaction container was partially sampled every 1 hour during polymerization reaction for 6 hours in total, and the concentration of unreacted monomers was measured by GC and the weight average molecular weight (Mw) and the molecular weight distribution (Mw/Mn) of the copolymer were measured by GPC. The monomer conversion rate (based on the total amount fed) and the molar ratio of the unreacted monomers, at each sampling time, were determined from the amount of feeding of the monomers until each sampling time and the change in concentration of unreacted monomers over time. The same data was used to calculate the molar ratio of each monomer consumed every 1 hour. The measurement results and the calculation results are shown in Tables 3 and 4.

**[Table 3]**

| Example 1 O Analysis of conversion rate and the like | | | | | | | |
|---|---|---|---|---|---|---|---|
| Time/h | Monomer conversion rate/% | | | Molar ratio of monomer in system/% | | Mw | Mw/Mn |
| | 4-HS | MCPMA | Average | 4-HS | MCPMA | | |
| 1 | 9.0 | 10.5 | 10.2 | 10.8 | 89.2 | 4,800 | 1.71 |
| 2 | 29.1 | 28.2 | 28.4 | 13.9 | 86.1 | 5,300 | 1.71 |
| 3 | 54.2 | 49.2 | 50.2 | 13.8 | 86.2 | 5,300 | 1.72 |
| 4 | 75.9 | 70.1 | 71.2 | 11.6 | 88.4 | 5,000 | 1.71 |
| 5 (at termination of dropping) | 90.8 | 84.6 | 85.8 | 12.6 | 87.4 | 4,700 | 1.72 |
| 6 | 97.5 | 92.7 | 93.5 | 7.9 | 92.1 | 4,600 | 1.74 |

**[Table 4]**

| Example 1 O Time window VS Monomer consumed | | |
|---|---|---|
| Time/h | Monomer consumed molar ratio /% | |
| | 4-HS | MCPMA |
| 0-1 | 17.6 | 82.4 |
| 1-2 | 22.1 | 77.9 |
| 2-3 | 23.0 | 77.1 |
| 3-4 | 20.7 | 79.3 |
| 4-5 | 20.4 | 79.6 |
| 5-6 | 17.4 | 82.6 |

In Example 1, the conversion rate of MCPMA as a low-reactive monomer was increased to 84.6% at the termination of feeding of the monomer solutions, and bias of monomer consumption during an aging time (5 to 6 hours) could be alleviated, namely, production of a copolymer having a remarkably large MCPMA composition could be suppressed. Furthermore, the average of the final conversion rates of the monomers was 93.5% and a high polymer yield could be achieved.

### [Comparative Example 2]

### (Preliminary test of Example 2)

To a container were added 30.0 g of PACS, 46.6 g of ECPMA, 11.9 g of dimethyl 2,2-azobisisobutyrate as a polymerization initiator and 83.7 g of PGME, and these were mixed to prepare a monomer solution. The molar ratio between PACS and ECPMA was 42:58.

A 500-mL four-necked flask reaction container made of glass, equipped with a stirrer, a condenser and a thermometer, was loaded with 60.0 g of PGME, and the resultant was set under a nitrogen atmosphere and then heated to 79°C. Subsequently, the monomer solution was dropped and fed to the reaction container at a fixed rate over 4 hours, and reaction was further continued (aged) for 2 hours after the termination of dropping. The temperature in the polymerization reaction was controlled to 79.0 to 80.0°C, and then cooled to room temperature after the termination of polymerization.

The reaction solution was partially sampled every 1 hour during polymerization reaction, and the concentration of unreacted monomers was measured by GC and the weight average molecular weight (Mw) and the molecular weight distribution (Mw/Mn) of the copolymer were measured by GPC. The monomer conversion rate (based on the total amount fed) and the molar ratio of the unreacted monomers, at each sampling time, were determined from the amount of feeding of the monomers until each sampling time and the change in concentration of unreacted monomers over time. The same data was used to calculate the molar ratio of each monomer consumed every 1 hour. The measurement results and the calculation results are shown in Tables 5 and 6.

**[Table 5]**

| Comparative Example 2 O Analysis of conversion rate and the like | | | | | | | |
|---|---|---|---|---|---|---|---|
| Time/h | Monomer conversion rate/% | | | Molar ratio of monomer in system/% | | Mw | Mw/Mn |
| | PACS | ECPMA | Average | PACS | ECPMA | | |
| 1 | 13.1 | 10.5 | 11.6 | 37.1 | 62.9 | 4,700 | 1.73 |
| 2 | 35.1 | 27.6 | 30.8 | 32.5 | 67.5 | 5,700 | 1.71 |
| 3 | 53.4 | 42.3 | 47.0 | 32.4 | 67.6 | 5,900 | 1.71 |
| 4 (at termination of dropping) | 82.9 | 70.6 | 75.7 | 29.6 | 70.4 | 5,700 | 1.71 |
| 5 | 94.7 | 86.4 | 89.9 | 21.9 | 78.1 | 5,500 | 1.73 |
| 6 | 97.8 | 92.7 | 94.8 | 17.8 | 82.2 | 5,400 | 1.78 |

**[Table 6]**

| Comparative Example 2 O Time window VS Monomer consumed | | |
|---|---|---|
| Time/h | Monomer consumed molar ratio /% | |
| | PACS | ECPMA |
| 0-1 | 47.7 | 52.3 |
| 1-2 | 48.1 | 51.9 |
| 2-3 | 47.3 | 52.7 |
| 3-4 | 43.1 | 56.9 |
| 4-5 | 35.1 | 64.9 |
| 5-6 | 26.1 | 73.9 |

While the molar ratio between PACS and ECPMA fed was 42:58, the composition of unreacted PACS was 37.1 to 32.4% and the composition of PACS consumed per hour was about 47 to 48% in the system at the initial stage of polymerization, and it was thus found that PACS was high in polymerizability, namely, was a highly-reactive monomer. Thereafter, the composition of PACS in the polymerization system was 29.6 to 32.4% by mol and almost a steady state was achieved in a time window of 3 hours to 4 hours, and the compositions of PACS and ECPMA consumed in this period satisfied 43.1:56.9, and it was thus considered that a copolymer having a molar ratio closer to that (42:58) between the monomers fed was produced. After the termination of feeding of all the monomer solutions, the molar ratio between the monomers consumed per unit time gradually deviated considerably from 42:58 for an aging time of 2 hours, and it was confirmed that a copolymer extremely high in composition of ECPMA was produced.

### [Example 2]

### (Preparation of first monomer solution)

The monomer composition of the first monomer solution was the same as the monomer composition (PACS: ECPMA = 32.4:67.6) in the reaction system at a time point of 3 hours after the initiation of polymerization at which reaction was almost in a steady state in the preliminary test (Comparative Example 2), and the monomers contained in the first monomer solution were set to be at 15% by mol relative to all the monomers. To a container were added 3.4 g of PACS, 7.9 g of ECPMA, 1.7 g of dimethyl 2,2-azobisisobutyrate as a polymerization initiator and 12.2 g of PGME, and these were mixed to provide the first monomer solution.

### (Preparation of second monomer solution)

To a different container were added 26.6 g of PACS, 38.7 g of ECPMA, 10.2 g of dimethyl 2,2-azobisisobutyrate as a polymerization initiator and 71.5 g of PGME, and these were mixed to provide the second monomer solution. The composition ratio of each of the monomers in the second monomer solution satisfied PACS: ECPMA = 43.6:56.4, and the molar composition of PACS as a highly-reactive monomer was higher than that in the first monomer solution by 5% by mol or more. Here, the respective totals of the monomers and those of the polymerization initiators contained in the first monomer solution and the second monomer solution were the same as the amounts used in the preliminary test (Comparative Example 1).

Next, a 500-mL four-necked flask reaction container made of glass, equipped with a stirrer, a condenser and a thermometer, was loaded with 78.0 g of PGME, and the resultant was set under a nitrogen atmosphere and then heated to 79°C. The first monomer solution was dropped and fed thereto at a fixed rate over 35 minutes, subsequently the dropping rate of the second monomer solution was set so as to be the same as the dropping rate of the first monomer solution on molar basis of the monomers, and the second monomer solution was dropped and fed at a fixed rate over 2 hours and 25 minutes. Dropping of 75% of all the monomers was completed at 3 hours from the initiation of monomer feeding. The dropping rate of the second monomer solution was reduced to one-half at 3 hours, and the balance was dropped over 2 hours. The total dropping time was 5 hours. Thereafter, reaction was continued for 1 hour. The temperature in the polymerization reaction was controlled to 79.0 to 80.0°C, and then cooled to room temperature after the termination of polymerization.

The solution in the reaction container was partially sampled every 1 hour during polymerization reaction for 6 hours in total, and the concentration of unreacted monomers was measured by GC and the weight average molecular weight (Mw) and the molecular weight distribution (Mw/Mn) of the copolymer were measured by GPC. The monomer conversion rate (based on the total amount fed) and the molar ratio of the unreacted monomers, at each sampling time, were determined from the amount of feeding of the monomers until each sampling time and the change in concentration of unreacted monomers over time. The same data was used to calculate the molar ratio of each monomer consumed every 1 hour. The measurement results and the calculation results are shown in Tables 7 and 8.

**[Table 7]**

| Example 2 O Analysis of conversion rate and the like | | | | | | | |
|---|---|---|---|---|---|---|---|
| Time/h | Monomer conversion rate/% | | | Molar ratio of monomer in system/% | | Mw | Mw/Mn |
| | PACS | ECPMA | Average | PACS | ECPMA | | |
| 1 | 10.8 | 9.2 | 9.9 | 3l.2 | 68.8 | 5,300 | 1.72 |
| 2 | 31.7 | 27.1 | 29.1 | 31.9 | 68.1 | 5,900 | 1.70 |
| 3 | 55.4 | 48.5 | 51.5 | 31.6 | 68.4 | 5,800 | 1.70 |
| 4 | 75.6 | 69.0 | 71.9 | 29.2 | 70.8 | 5,500 | 1.70 |
| 5 (at termination of dropping) | 86.5 | 79.8 | 82.7 | 32.8 | 67.2 | 5,300 | 1.70 |
| 6 | 94.4 | 88.4 | 91.0 | 26.3 | 73.7 | 5,200 | 1.71 |

**[Table 8]**

| Example 2 O Time window VS Monomer consumed | | |
|---|---|---|
| Time/h | Monomer consumed molar ratio /% | |
| | PACS | ECPMA |
| 0-1 | 46.0 | 54.0 |
| 1-2 | 45.8 | 54.2 |
| 2-3 | 44.5 | 55.5 |
| 3-4 | 41.7 | 58.3 |
| 4-5 | 42.4 | 57.6 |
| 5-6 | 39.8 | 60.2 |

In Example 2, the conversion rate of ECPMA as a low-reactive monomer was increased to 79.8% at the termination of feeding of the monomer solutions, and bias of monomer consumption during an aging time (5 to 6 hours) could be alleviated, namely, production of a copolymer having a remarkably large ECPMA composition could be suppressed. Furthermore, the average of the final conversion rates of the monomers was 91.0% and a high polymer yield could be achieved.

### [Evaluation of composition homogeneity of copolymer]

The composition homogeneity of a copolymer was evaluated by comparing the copolymer synthesized in Example 1 and the copolymer synthesized in Comparative Example 1, and comparing the copolymer synthesized in Example 2 and the copolymer synthesized in Comparative Example 2.

Specifically, each copolymer was subjected to GPC according to the above measurement method, and a copolymer fraction product was fractionated to three fractions respectively having high/medium/low molecular weights so that the weights of copolymers contained in the fractions were equal to one another. The composition ratio of each monomer of the copolymer, contained in each of the fractions, was analyzed by ¹³C-NMR. The evaluation results are shown in Table 9 and 10. The copolymers synthesized in Example 1 and Example 2 could be each confirmed to be remarkably improved in homogeneity as compared with the copolymers synthesized in Comparative Example 1 and Comparative Example 2.

**[Table 9]**

| | 13C-NMR composition ratio/% | | |
|---|---|---|---|
| | 4-HS | MCPMA | Difference |
| Example 1 | | | |
| Higher molecule side | 21.1 | 78.9 | 0.1 |
| Medium | 21.0 | 79.0 | |
| Lower molecule side | 19.6 | 80.4 | -1.4 |

| Comparative Example 1 | | | |
|---|---|---|---|
| Higher molecule side | 23.0 | 77.0 | 1.1 |
| Medium | 21.9 | 78.1 | |
| Lower molecule side | 17.9 | 82.1 | -4.0 |

**[Table 10]**

| | 13C-NMR composition ratio/% | | |
|---|---|---|---|
| | PACS | ECPMA | Difference |
| Example 2 | | | |
| Higher molecule side | 44.0 | 56.0 | 0.4 |
| Medium | 43.6 | 56.4 | |
| Lower molecule side | 43.3 | 56.7 | -0.3 |

| Comparative Example 2 | | | |
|---|---|---|---|
| Hiqher molecule side | 44.7 | 55.3 | 0.8 |
| Medium | 43.9 | 56.1 | |
| Lower molecule side | 41.6 | 58.4 | -2.3 |

### [Example 3]

The method for feeding the first monomer solution was changed to a method involving loading to a reaction container in advance before the initiation of polymerization, and polymerization was performed with the same types and amounts of monomers as those in Example 1.

### (Preparation of first monomer solution)

The monomer composition of the first monomer solution was the same as the monomer composition (4-HS: MCPMA = 10.4:89.6) in the reaction system at a time point of 3 hours after the initiation of polymerization at which reaction was almost in a steady state in the preliminary test (Comparative Example 1), and the monomers contained in the first monomer solution were set to be at 13.2% by mol relative to all the monomers. To a 500-mL four-necked flask reaction container made of glass, equipped with a stirrer, a condenser, and a thermometer, were added 3.9 g of a 24.9% by mass 4-HS/MEK solution, 11.7 g of MCPMA and 99.6 g of MEK, and these were mixed to provide the first monomer solution.

### (Preparation of second monomer solution)

To a different container were added 52.7 g of a 24.9% by mass 4-HS/MEK solution, 67.2 g of MCPMA, 12.4 g of dimethyl 2,2-azobisisobutyrate as a polymerization initiator and 52.3 g of MEK, and these were mixed to provide the second monomer solution. The composition ratio of each of the monomers in the second monomer solution satisfied 4-HS: MCPMA = 21.5:78.5, and the molar composition of 4-HS as a highly-reactive monomer was higher than that in the first monomer solution by 5% by mol or more. Here, the respective totals of the monomers and those of the polymerization initiators contained in the first monomer solution and the second monomer solution were the same as the amounts used in the preliminary test (Comparative Example 1).

The reaction container in which the first monomer solution was placed was set under a nitrogen atmosphere and then heated to 79°C. The second monomer solution was dropped and fed thereto at a fixed rate over 5 hours. The composition ratio of the highly-reactive monomer (4-HS) in the reaction system at the initiation of polymerization was less influenced by dropping of the second monomer solution even if such an influence was present, and thus was almost equal to the composition ratio in the first monomer solution and was 52% of the composition ratio (20% by mol) of 4-HS in all the monomers. After the termination of dropping of the second monomer solution, reaction was continued for 1 hour. The temperature in the polymerization reaction was controlled to 79.0 to 80.0°C, and then cooled to room temperature after the termination of polymerization.

The solution in the reaction container was partially sampled every 1 hour during polymerization reaction for 6 hours in total, and the concentration of unreacted monomers was measured by GC and the weight average molecular weight (Mw) and the molecular weight distribution (Mw/Mn) of the copolymer were measured by GPC. The monomer conversion rate (based on the total amount fed) and the molar ratio of the unreacted monomers, at each sampling time, were determined from the amount of feeding of the monomers until each sampling time and the change in concentration of unreacted monomers over time. The same data was used to calculate the molar ratio of each monomer consumed every 1 hour. The measurement results and the calculation results are shown in Tables 11 and 12.

**[Table 11]**

| Example 3 O Analysis of conversion rate and the like | | | | | | | |
|---|---|---|---|---|---|---|---|
| Time/h | Monomer conversion rate/% | | | Molar ratio of monomer in system/% | | Mw | Mw/Mn |
| | 4-HS | MCPMA | Average | 4-HS | MCPMA | | |
| 1 | 7.6 | 6.6 | 6.8 | 15.0 | 85.0 | 6,500 | 1.73 |
| 2 | 28.2 | 23.8 | 24.7 | 13.7 | 86.3 | 6,600 | 1.71 |
| 3 | 49.5 | 43.6 | 44.7 | 12.9 | 87.1 | 6,100 | 1.71 |
| 4 | 68.7 | 62.1 | 63.4 | 13.2 | 86.8 | 5,700 | 1.71 |
| 5 (at termination of dropping) | 87.9 | 81.2 | 82.6 | 13.8 | 86.2 | 5,300 | 1.71 |
| 6 | 94.5 | 92.2 | 92.7 | 14.9 | 85.1 | 5,000 | 1.74 |

**[Table 12]**

| Example 3 O Time window VS Monomer consumed | | |
|---|---|---|
| Time/h | Monomer consumed, molar ratio /% | |
| | 4-HS | MCPMA |
| 0-1 | 22.3 | 77.7 |
| 1-2 | 23.0 | 77.0 |
| 2-3 | 21.2 | 78.8 |
| 3-4 | 20.6 | 79.4 |
| 4-5 | 20.1 | 79.9 |
| 5-6 | 13.1 | 86.9 |

Example 3, which related to a method feeding the first monomer solution to a reaction container in advance before the initiation of polymerization, was confirmed to provide homogenization of monomer consumption, namely, an enhancement in composition homogeneity of a copolymer produced, as compared with Comparative Example 1.

### Industrial Applicability

A copolymer of a hydroxystyrene-based monomer and a (meth)acrylic acid ester-based monomer, obtained by the present invention, can be suitably used as a photoresist for semiconductor manufacturing.

## Claims

1. A method for producing a copolymer, comprising performing polymerization reaction of at least one hydroxystyrene-based monomer and at least one (meth)acrylic acid ester-based monomer in the coexistence of a radical polymerization initiator and a solvent, wherein
the hydroxystyrene-based monomer is a hydroxystyrene in which the number of hydroxyl groups is any of 1 to 3 or a derivative in which at least some of hydroxyl groups in the hydroxystyrene is protected with a group dissociable by the action of acid or base, and
the polymerization reaction is performed with a consumption rate difference between the monomers being averaged under the following conditions (1) to (4),
(1) preparing a plurality of monomer solutions which each contain the hydroxystyrene-based monomer and the (meth)acrylic acid ester-based monomer and in which composition ratios of the respective monomers are different, wherein
a solution in which a composition ratio of a monomer having the highest reactivity is lowest is defined as a first monomer solution and a solution in which the composition ratio of the monomer having the highest reactivity is higher than that in the first monomer solution by 5% by mol or more is defined as a n-th monomer solution (n is an integer of 2 or more), in the plurality of monomer solutions, and
an amount of the monomers contained in the first monomer solution is 5% by mol or more and 33% by mol or less based on an amount of all the monomers,
(2) initially feeding the first monomer solution to a reaction container and then sequentially feeding the n-th monomer solution into the reaction container,
(3) regulating the composition ratio of the monomer having the highest reactivity to 30% to 90% based on the composition ratio of the monomer having the highest reactivity in all the monomers, in a reaction system at the initiation of the polymerization reaction, and
(4) achieving a conversion rate of a monomer having the lowest reactivity, of 75% or more, at the completion of feeding of all the monomer solutions.

2. The method for producing a copolymer according to claim 1, wherein a composition ratio of each of the monomers consumed in the polymerization reaction in a period until 1 hour from the initiation of the polymerization reaction is within ±5% by mol based on a composition ratio of each of the monomers in all the monomers.

3. The method for producing a copolymer according to claim 1 or 2, comprising regulating a composition ratio of each of the monomers in a reaction system at the initiation of the polymerization reaction, within ±3% by mol based on a test composition ratio calculated in the following preliminary test,
(Procedure of preliminary test)
a dropping liquid is prepared by mixing monomers having a monomer composition of an objective copolymer, a radical polymerization initiator and a solvent, and once a solvent is loaded to a reaction container and heated up to a predetermined reaction temperature, the dropping liquid is dropped at a fixed rate over 3 hours or more and furthermore aged for 2 hours or more after the termination of dropping, and
the progress of the polymerization reaction is sampled to measure a composition ratio of unreacted monomers in a polymerization reaction system, and determine a test composition,
· Test composition = monomer composition ratio in amount of feeding of monomers, of 60% to 100% (termination of dropping), and steady state of composition ratio of unreacted monomers.

4. The method for producing a copolymer according to any one of claims 1 to 3, wherein a composition ratio of each of the monomers consumed in polymerization in a period until the stopping of polymerization from the termination of dropping of all the monomer solutions is within ±3% by mol based on a composition ratio of all the monomers.

5. The method for producing a copolymer according to any one of claims 1 to 4, wherein a composition ratio of a highly-reactive monomer in a composition ratio of each of the monomers consumed in polymerization in a period until the stopping of polymerization from the termination of dropping of all the monomer solutions is 80% or more based on a composition ratio of a highly-reactive monomer in all the monomers.

6. The method for producing a copolymer according to any one of claims 1 to 5, wherein feeding rates of the monomer solutions are reduced until the termination of dropping of the monomer solutions from any time point at which an amount of feeding the monomers is 60% by mol to 85% by mol of all the monomers.

7. The method for producing a copolymer according to any one of claims 1 to 6, wherein the method is applied to production of a copolymer in which a composition ratio of the monomers consumed at any time window of the polymerization reaction in the case of polymerization performed by the same procedure as the preliminary test is deviated by ±10% or more from a composition ratio of all the monomers.

8. The method for producing a copolymer according to any one of claims 1 to 7, wherein the method is applied to production of a copolymer in which a lower molar ratio is 10% by mol or more and 40% by mol or less in comparison between a molar ratio of a styrene-based monomer and that of (meth)acrylic acid ester-based monomer in an objective copolymer.

9. The method for producing a copolymer according to any one of claims 1 to 8, wherein conversion rates of the monomers after the initiation of the polymerization reaction are each within ±20% based on an average value of the conversion rates of the monomers.

10. The method for producing a copolymer according to any one of claims 1 to 9, wherein the hydroxystyrene-based monomer is at least one selected from the group consisting of 4-hydroxystyrene and 4-acetoxystyrene.

11. A copolymer having a structural unit derived from at least one hydroxystyrene-based monomer and a structural unit derived from at least one (meth)acrylic acid ester-based monomer, wherein
the hydroxystyrene-based monomer is a hydroxystyrene in which the number of hydroxyl groups is any of 1 to 3 or a derivative in which at least some of hydroxyl groups in the hydroxystyrene is protected with a group dissociable by the action of acid or base,
a composition ratio between the hydroxystyrene-based monomer-derived structural unit and the (meth)acrylic acid ester-based monomer-derived structural unit in the copolymer is 10:90 to 45:55 or 55:45 to 90:10 in terms of molar ratio, and
when the copolymer is subjected to gel permeation chromatography and a copolymer fraction product is fractionated to three fractions respectively having high/medium/low molecular weights so that weights of copolymers contained in the fractions are equal to one another, a monomer composition ratio of the copolymer contained in the high molecular weight fraction is within the range of ±1% relative to a monomer composition ratio of the copolymer contained in the medium molecular weight fraction and a monomer composition ratio of the copolymer contained in the low molecular weight fraction is within the range of ±2% relative to the monomer composition ratio of the copolymer contained in the medium molecular weight fraction.

12. The copolymer according to claim 11, wherein the hydroxystyrene-based monomer is at least one selected from the group consisting of 4-hydroxystyrene and 4-acetoxystyrene.
